# FASCICULE DE BREVET EUROPEEN

(11) **EP 2 889 602 B1**
(45) Date de publication et mention de la délivrance du brevet: **25.01.2023**
(21) Numéro de dépôt: 14199559.7
(22) Date de dépôt: 22.12.2014
(51) Int. Cl.: G01N 1/40, G01N 1/22, H01J 49/26, H01J 49/04, G01N 21/71, G01N 15/06, G01N 15/14, G01N 15/00

(54) **Dispositif de caractérisation de particules dans un jet de particules sous vide.**
Vorrichtung zur Charakterisierung von Teilchen in einem Teilchenstrahl in einem Vakuum
Device for characterising particles in a particle stream under vacuum

(30) Priorité: 23.12.2013 FR 1363437
(43) Date de publication de la demande: 01.07.2015
(73) Titulaire: COMMISSARIAT À L'ÉNERGIE ATOMIQUE ET AUX ÉNERGIES ALTERNATIVES, 75015 Paris (FR); Synchrotron Soleil, 91192 Gif-sur-Yvette Cedex (FR)
(72) Inventeur: Sublemontier, Olivier, 92260 FONTENAY AUX ROSES (FR); Barreda, Flory-Anne, 75014 Paris (FR); Sirven, Jean-Baptiste, 75013 Paris (FR); Lacour, Jean-Luc, 61140 Villebon-sur-Yvette (FR); Nicolas, Christophe, 91620 Nozay (FR); Robert, Emmanuel, 91190 GIF sur Yvette (FR)
(74) Mandataire: Gevers & Orès

(56) Documents cités:
- US-A- 4 383 171
- SUBLEMONTIER O ET AL: "CO2 laser-driven pyrolysis synthesis of silicon nanocrystals and applications", JOURNAL OF ALLOYS AND COMPOUNDS, ELSEVIER SEQUOIA, LAUSANNE, CH, vol. 483, no. 1-2, 26 août 2009 (2009-08-26), pages 499-502, XP026545597, ISSN: 0925-8388, DOI: 10.1016/J.JALLCOM.2008.07.233 [extrait le 2008-11-21]
- DI FONZO F ET AL: "Focused nanoparticle-beam deposition of patterned microstructures", APPLIED PHYSICS LETTERS, AMERICAN INSTITUTE OF PHYSICS, US, vol. 77, no. 6, 7 août 2000 (2000-08-07), pages 910-912, XP012027235, ISSN: 0003-6951, DOI: 10.1063/1.1306638
- LINDBLAD ANDREAS ET AL: "A multi purpose source chamber at the PLEIADES beamline at SOLEIL for spectroscopic studies of isolated species: Cold molecules, clusters, and nanoparticles", REVIEW OF SCIENTIFIC INSTRUMENTS, AIP, MELVILLE, NY, US, vol. 84, no. 11, 14 November 2013 (2013-11-14), XP012178820, ISSN: 0034-6748, DOI: 10.1063/1.4829718 [retrieved on 1901-01-01]
- AMODEO T ET AL: "On-line determination of nanometric and sub-micrometric particle physicochemical characteristics using spectral imaging-aided Laser-Induced Breakdown Spectroscopy coupled with a Scanning Mobility Particle Sizer", SPECTROCHIMICA ACTA. PART B: ATOMIC SPECTROSCOPY, NEW YORK, NY, US, US, vol. 64, no. 10, 1 October 2009 (2009-10-01), pages 1141-1152, XP026676774, ISSN: 0584-8547, DOI: 10.1016/J.SAB.2009.07.031 [retrieved on 2009-08-08]

## Description

La présente invention se rapporte à la caractérisation de particules évoluant dans un jet de particules sous vide.

Elle s'applique notamment à des nanoparticules.

Une technique connue pour déterminer la composition de telles particules, et leur concentration dans le milieu ambiant, est la technique dite LIBS (pour *Laser-Induced Breakdown Spectroscopy* selon la terminologie anglo-saxonne). Cette technique permet de former un plasma en focalisant une impulsion laser dans le gaz porteur (par exemple l'air ambiant). Lorsqu'une particule se trouve dans le volume du plasma, elle est vaporisée par le plasma et génère un signal lumineux spécifique. La lumière émise par le plasma est analysée et permet d'obtenir des informations sur la composition chimique de la particule et du milieu ambiant.

Un inconvénient majeur de cette technique est que la caractérisation effectuée (en l'occurrence, nature chimique) est limitée par l'émission intense du plasma formé dans le gaz ambiant, qui se superpose à l'émission lumineuse issue de la particule elle-même, ce qui limite, en pratique, la taille des particules détectables.

Typiquement, on a pu montrer que cette technique permettait de caractériser des nanoparticules pouvant présenter des dimensions pouvant descendre à 100nm, mais pas en deçà.

L'utilisation d'un laser pour générer un plasma formé par une interaction entre le laser et des particules a fait l'objet d'autres développements. Ainsi, une autre technique dite LIBD (pour *Laser-Induced Breakdown Détection* selon la terminologie anglo-saxonne), déjà utilisée pour former un plasma dans une solution aqueuse colloïdale (colloïdes = particules en suspension dans la solution), consiste à focaliser un faisceau laser pulsé dans la solution. L'intensité du laser dans le plan focal est ajustée de sorte que rien ne se passe en l'absence de particule. En revanche, si une particule est présente au point focal, l'interaction laser-particule produit un plasma que l'on peut détecter de différentes façons, optique ou acoustique notamment.

La technique LIBD s'est avérée capable de détecter des nanoparticules dont la taille est inférieure à 20nm, pour des densités de nanoparticules inférieures à 10⁶ cm⁻³. Sa sensibilité de détection des nanoparticules individuelles est donc meilleure qu'avec la LIBS. Elle permet également de déterminer la taille des nanoparticules. Elle permet encore de déterminer des distributions de taille des différents colloïdes au sein de la solution aqueuse.

En revanche, la LIBD ne permet pas d'accéder à la composition chimique de la particule.

Par ailleurs, il n'a pas été rapporté dans la littérature que cette technique pouvait être utilisée efficacement dans d'autres domaines que les suspensions colloïdales, en particulier pour des particules présentes dans un jet de particules sous vide

US4383171 A1 concerne un dispositif de caractérisation de particules évoluant sous vide. Toutefois, le système pour générer les particules est un système conçu pour générer un faisceau de particules individuelles dans la chambre sous vide.

Sublemontier et al, Journal of Alloys and Compounds, vol. 483, p. 499-502, 2009, concerne un dispositif de caractérisation de particules évoluant sous vide dans un jet de particules mais le faisceau laser réalise une ionisation de l'ensemble des particules du jet qui rencontre le faisceau laser.

Lindblad et al, Review of Scientific Instruments, vol. 84, 113105, 2013, concerne un dispositif de caractérisation de particules évoluant sous vide mais met en oeuvre comme source un rayonnement synchrotron.

Amodeo et al, Spectrochimica Acta part B, vol. 64, p. 1141-1152, 2009, concerne un dispositif de caractérisation de particules évoluant sous vide mettant en oeuvre la LIBS. Toutefois, il ne s'intéresse pas à l'analyse d'une particule individuelle dans le volume focal.

Un objectif de l'invention est de pallier l'une au moins des limitations mentionnées ci-dessus.

En particulier, il serait intéressant de proposer un dispositif de caractérisation de particules évoluant sous vide dans un jet de particules, permettant de déterminer la composition chimique de ces particules, dont les dimensions sont plus faibles que 100nm, voire plus faibles que 20nm.

De plus, il serait également intéressant de pouvoir caractériser rapidement des profils de densité des particules dans le jet. En effet, aucune des configurations utilisées dans les exemples précités s'appuyant soit sur la LIBS, soit sur la LIBD, ne le permet. Plus généralement, le demandeur n'a pas connaissance de techniques de type LIBD ou LIBS permettant de déterminer un profil de densité de particules dans un jet. Cette dernière caractérisation est par exemple utile lorsque les particules du jet de particules doivent être utilisées pour réaliser un dépôt sur un substrat. La connaissance de ces profils permettrait en effet de mieux contrôler le dépôt.

Pour atteindre l'un au moins de ces objectifs, l'invention propose un dispositif de caractérisation de particules évoluant sous vide dans un jet de particules, selon la revendication 1.

Le dispositif selon l'invention pourra également présenter l'une au moins des caractéristiques suivantes, prises seules ou en combinaison :
- le dispositif optique comprend au moins une fibre optique, un moyen de collimation et un moyen de focalisation du faisceau laser et éventuellement un miroir de renvoi du faisceau laser situé entre le moyen de collimation et le moyen de focalisation ;
- le dispositif optique comprend également un moyen de refroidissement de la fibre optique, disposé à la sortie de ladite fibre optique ;
- un moyen pour translater le dispositif optique avec le ou chaque dispositif de détection, selon au moins une direction Y, Z perpendiculaire à la direction X de propagation du jet de particules dans la chambre ;
- le dispositif optique avec le ou chaque dispositif de détection est conformé pour translater lesdits dispositifs selon au moins une première direction Y perpendiculaire à la direction X de propagation du jet de particules dans la chambre 120 et une deuxième direction Z à la fois perpendiculaire à la direction X de propagation du jet de particules dans la chambre et à la première direction Y, la translation dans l'une et/ou l'autre des deux directions Y, Z étant réalisée de façon indépendante ;
- le moyen pour translater le premier dispositif optique avec le ou chaque dispositif de détection est également conformé pour translater ceux-ci selon la direction X de propagation du jet de particules dans la chambre ;
- le dispositif de détection ou, selon le cas, l'un au moins des dispositifs de détection des particules émises par le plasma généré par l'interaction entre le faisceau laser et une particule du jet de particules comprend un détecteur de photons ou un détecteur d'ions ou un détecteur d'électrons, les photons, ions et électrons étant des particules émises par ce plasma ;
- le dispositif de détection ou, selon le cas, l'un au moins des dispositifs de détection comprend :
   - une fibre optique ;
   - un ensemble optique pour collimater la lumière émise par le plasma, filtrer la longueur d'onde du laser et focaliser cette lumière dans la fibre optique ;
   - un détecteur de photons ; et
   - un moyen de discrimination en longueur d'onde, relié d'une part à la fibre optique et d'autre part au détecteur de photons ;
- le dispositif de détection ou, selon le cas, l'un au moins des dispositifs de détection comprend :
   - un miroir dichroïque bloquant la longueur d'onde du laser ;
   - un détecteur de photons ; et
   - un moyen de focalisation de la lumière situé entre le miroir et le détecteur de photons ;
- le dispositif prévoit au moins deux dispositifs de détection dont l'un comprend un détecteur de photons et dont l'autre comprend un détecteur d'ions ou d'électrons ;
- le moyen d'acquisition et de traitement des données est adapté pour fonctionner selon un mode de comptage d'évènements, à savoir le nombre de fois où une particule a été détectée dans le volume focal pour un nombre donné d'impulsions du laser.
- le système pour générer un jet de particules comprend une lentille aérodynamique ou une tuyère ;
- le système pour générer un jet de particules comprend, en outre :
   - un générateur de particules dans un gaz porteur ;
   - une chambre de détente à laquelle est associé un moyen de pompage du fluide susceptible d'être présent dans la chambre de détente ; et
   - un écorceur reliant la chambre de détente à la chambre ;
   la lentille aérodynamique ou la tuyère étant située entre le générateur et la chambre de détente ;
- le système pour générer un jet de particules comprend en outre un générateur de particules dans un gaz porteur, la lentille aérodynamique ou tuyère étant située entre le générateur et la chambre, chambre dans laquelle la lentille aérodynamique ou tuyère débouche directement.

L'invention concerne également l'utilisation d'un dispositif pour caractériser des particules évoluant sous vide dans un jet de particules selon l'invention, dans laquelle après avoir choisi le type de laser, on ajuste le volume focal par les paramètres du dispositif optique en fonction de la densité supposée des particules dans le jet de particules.

Cette utilisation pourra notamment être effectuée pour des nanoparticules présentant une dimension d'au moins 5nm.

D'autres caractéristiques, buts et avantages de l'invention seront énoncés dans la description détaillée ci-après faite en référence aux figures qui représentent, respectivement :
- la figure 1 est une vue générale en coupe d'un dispositif de caractérisation de particules selon l'invention;
- la figure 2 est une vue agrandie de la figure 1, réalisée au niveau des moyens optiques appartenant au dispositif selon l'invention ;
- la figure 3 est une vue agrandie de la figure 2, ciblant plus particulièrement la zone d'intérêt pour caractériser les particules ;
- la figure 4 est une vue agrandie de la figure 1, réalisée au niveau d'un dispositif de refroidissement appartenant au dispositif selon l'invention ;
- la figure 5 est une autre vue agrandie de la figure 1, réalisée au niveau d'un moyen permettant de translater le dispositif ;
- la figure 6 représente les résultats d'un test expérimental réalisé avec le dispositif représenté sur les figures 1 et 2 ;
- la figure 7 est une variante envisageable des moyens optiques représentés sur la figure 2.

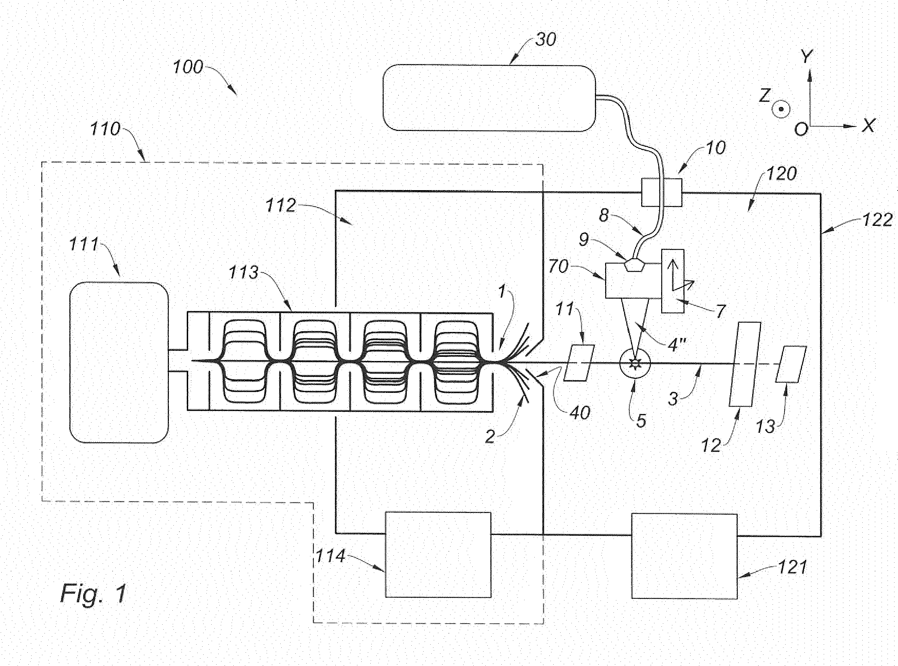

Nous allons tout d'abord décrire l'invention à l'appui des figures 1 à 4.

Le dispositif 100 selon l'invention comprend un système 110 pour générer un jet de particules, en l'occurrence dans un gaz porteur. A cet effet, le système 110 comprend un générateur 111 de particules dans un gaz porteur, une chambre de détente 112 à laquelle est associé un moyen de pompage 114 du fluide présent dans la chambre de détente 112 et une lentille aérodynamique 113 ou tout autre moyen équivalent situé entre le générateur 111 et la chambre de détente 112.

La génération du jet de particules peut être réalisée de différentes manières.

On peut ainsi prévoir que le générateur 111 se présente sous la forme d'un moyen de production de particules en phase gazeuse par procédé plasma, combustion ou pyrolyse laser (aérosols). On peut également prévoir que le générateur 111 se présente sous la forme d'un moyen d'atomisation d'une suspension de particules dispersées dans un solvant (exemple : système TSI Aérosol Generator 3076). On peut également prévoir que le générateur 111 se présente sous la forme d'un distributeur de poudres (exemple : système PALAS RBG 1000).

Les particules (aérosols) sont ensuite acheminées à pression ambiante par un gaz porteur (argon, hélium, air, par exemple) jusqu'à l'entrée de la lentille aérodynamique 113. Une lentille aérodynamique permet de produire un jet sous vide dans lequel les particules sont focalisées ou fortement collimatées au sein du gaz porteur.

Un exemple de lentille aérodynamique 113 (tel que représenté sur la figure 1), particulièrement avantageux pour produire un faisceau de particules focalisé ou fortement collimaté au sein du gaz porteur, est une lentille aérodynamique 113 comportant une succession de cinq orifices (O₁, O₂, O₃, O₄ et O₅), de diamètres différents, qui créent une série de contraction et d'expansion de l'écoulement conduisant à la séparation des particules vis-à-vis du gaz porteur de par leur inertie. La lentille aérodynamique se termine par une buse 1 de sortie. Une telle lentille aérodynamique est par exemple décrite par X.F. Zhang, K.A. Smith, D.R. Worsnop, J.L. Jimenez, J.T. Jayne, C.E. Kolb, J. Morris, and P. Davidovits, Aerosol Science and Technology 38, 619 (2004) (D1). On pourrait cependant prévoir d'autres types de lentilles aérodynamiques, pour lesquelles la focalisation des particules dans le gaz porteur est moindre (mais néanmoins élevée).

Dans la chambre de détente 112, la pression est généralement maintenue entre 10⁻⁴ mbar et 10⁻¹ mbar en présence de particules, en particulier de nanoparticules. Pour obtenir cette pression, le moyen de pompage 114 peut être une pompe dite « roots » multiétagée ou turbomoléculaire. Le maintien d'une faible pression dans la chambre de détente 112 permet la formation définitive du jet de particules dans un gaz porteur. Cependant, pour des particules de dimensions importantes, on peut prévoir une pression allant jusqu'à 10mbar, la gamme de pression envisageable étant alors comprise entre 10⁻⁴ mbar et 10 mbar. Dans ce cas, on peut prévoir un moyen de pompage 114 plus classique (à palettes, à vis, etc...).

Le dispositif 100 comprend également une chambre 120 à laquelle est associé un moyen de pompage 121 du fluide présent dans la chambre 120.

Cette chambre 120 est reliée à la chambre de détente 112 par l'intermédiaire d'un écorceur 40. Cet écorceur 40 permet d'éliminer la majeure partie du gaz porteur tout en introduisant un jet 3 de particules dans la chambre 120 (on peut d'ailleurs observer sur la figure 1, la majeure partie de gaz porteur 2 restant dans la chambre de détente 112, en amont de l'écorceur 40 en référence à la direction du jet). Typiquement, cet écorceur 40 présente un orifice de passage de taille millimétrique, généralement compris entre 0,5 et 3 mm selon le type de particules considéré.

Le moyen de pompage 121 associé à la chambre 120 peut être du même type que le moyen de pompage 114 associé à la chambre de détente 112. Ce moyen de pompage 121 permet cependant d'atteindre, dans la chambre 120, des pressions plus faibles que dans la chambre de détente 112, par pompage différentiel. Par ailleurs, le moyen de pompage 121 permet d'extraire tout résidu de gaz porteur qui aurait traversé l'écorceur 40.

A titre d'exemple, la pression obtenue dans la chambre 120 est comprise entre 10⁻⁸ mbar et 10⁻² mbar, le plus souvent entre 10⁻⁷ mbar et 10⁻² mbar. Ces pressions sont particulièrement bien adaptées pour des nanoparticules, notamment pour des nanoparticules dont les dimensions sont inférieures à 200nm.

Il est cependant possible, pour des particules de dimensions plus importantes (microparticules, par exemple), de prévoir une pression pouvant aller jusqu'à 10mbar, la gamme de pressions envisageables pouvant ainsi être comprise entre 10⁻⁸ mbar et 10 mbar, le plus souvent entre 10⁻⁷ mbar et 10 mbar. Pour une telle pression, on peut d'ailleurs prévoir des pompes plus classiques (à palettes, à vis, etc...).

Toutes ces pressions entrent dans la définition d'une chambre dite « sous vide » dans le cadre de l'invention.

Dans une variante (non représentée sur les schémas annexés), on peut s'affranchir de la chambre de détente 112. En effet, dans des conditions où il est possible d'envisager que la pression dans la chambre 120 soit comparable à la pression qui devrait régner dans la chambre de détente 112 (par exemple pour effectuer le dépôt des particules sur une surface cible située dans la chambre 120, qui serait alors une chambre de dépôt ; ex. : 10⁻² mbar), la chambre de détente 112 n'est plus indispensable. Dans ce cas, la lentille aérodynamique 113 débouche directement dans la chambre 120 (on comprend alors que ni l'écorceur 40, ni le moyen de pompage 114 ne sont mis en oeuvre). Pour autant, le moyen de pompage 121 permet toujours d'éliminer le gaz porteur des particules, même en l'absence d'écorceur 40.

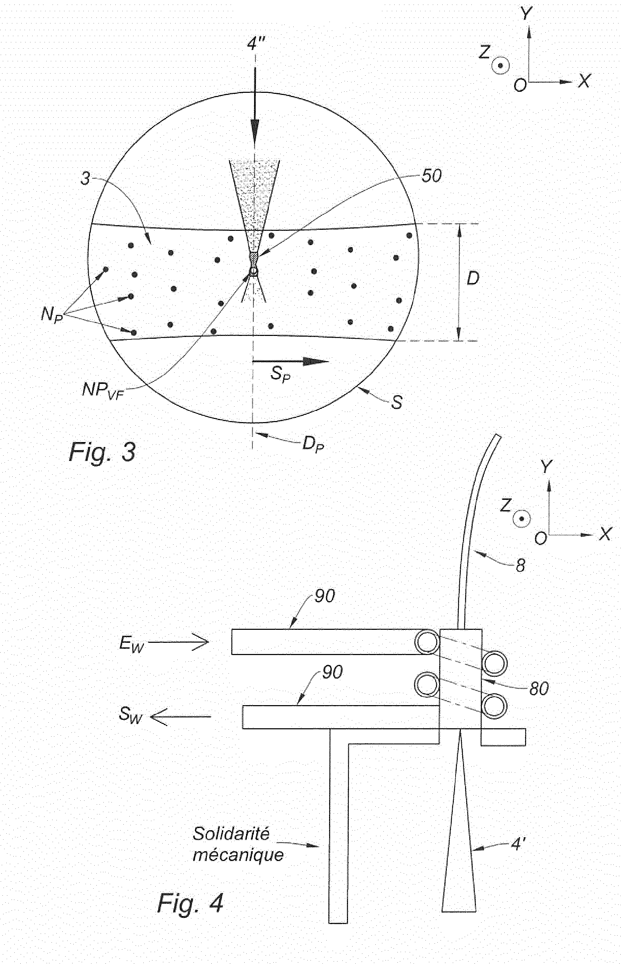

Le dispositif 100 comprend également un laser 30 émettant un faisceau laser sous la forme d'impulsions dont les caractéristiques sont contrôlées par un moyen de commande 27. A ce laser 30 est associé un dispositif optique 60 agencé pour focaliser ledit faisceau, au sein de la chambre, perpendiculairement à la direction de propagation du jet de particules. Par perpendiculairement, il convient de comprendre que la direction D_{P} de propagation du faisceau focalisé 4" (figure 3 ; axe central du cône de focalisation) est perpendiculaire à la direction de propagation S_{P} du jet 3 de particules.

L'intérêt du laser 30 et du dispositif optique associé 60 est finalement de créer, localement, un plasma par l'interaction entre le faisceau laser et une seule particule du jet. Ce plasma est généré dans un volume focal 50 par l'interaction entre le faisceau laser 4 et la particule située dans le volume focal 50.

Par volume focal 50, on entend le volume à l'intérieur duquel la densité de puissance du faisceau laser (W/cm² ; éclairement) est supérieure ou égale au seuil de formation d'un plasma à la suite de l'interaction laser-particule (cf. figure 3 où le volume focal 50 est représenté en gris foncé, volume focal 50 dans lequel se situe une particule NP_{VF} du jet 3 de particules NP). Typiquement, ce volume focal 50 est compris entre 10⁻⁸ et 10⁻⁶ cm³.

L'éclairement dans le volume focal 50 ainsi que les dimensions de ce volume focal 50 sont définis par les caractéristiques du laser 30 et du dispositif optique 60.

L'intérêt de la formation d'un plasma sera précisé par la suite.

Le laser 30 peut être de type Nd :YAG, Excimer ou laser à fibre. Les durées d'impulsion peuvent être de l'ordre de plusieurs nanosecondes (3 à 30 ns). Dans ce cas, l'énergie par impulsion doit être de l'ordre du mJ, de manière à obtenir une densité de puissance (éclairement) supérieure à, ou de l'ordre, d'une valeur seuil qu'il convient d'atteindre pour générer, dans le volume focal 50, un plasma par l'interaction entre le faisceau laser 4 et la particule située dans le volume focal 50.

Typiquement, pour être en mesure de créer un plasma dans le volume focal 50 permettant de réaliser une analyse chimique de cette particule, et éventuellement établir un profil de la répartition en densité des particules dans le jet, cette valeur seuil est de l'ordre de 1 GW/cm² pour une cible solide métallique (exemple : particule métallique). Dans le cas général d'une cible solide, cette valeur seuil est comprise entre 100 MW/cm² et quelques GW/cm² selon le matériau de la cible. Par exemple, une solution envisageable est l'emploi d'un laser 30 à fibre de type « Q-switched » émettant dans l'infrarouge (par exemple λ = 1030 ou 1064 nm). La durée d'impulsion varie entre 9ns et 20ns, selon la cadence de répétition des impulsions. Ce type de laser 30 présente une cadence de répétition ajustable et relativement élevée, puisqu'elle peut être comprise entre 1 kHz et 1000 kHz. On peut alors choisir une énergie par impulsion suffisamment élevée pour atteindre le seuil de densité de puissance du laser 30 permettant la formation du plasma tout en gardant une cadence de répétition relativement élevée.

Cette cadence de répétition est importante lorsque l'on cherche à établir un profil de densité en particules au sein du jet 3 de particules. En effet, cette cadence détermine la durée de la mesure du profil de densité en particules, comme cela sera détaillé par la suite.

Les lasers 30 décrits précédemment sont des lasers dont la durée d'impulsion est dans le domaine de la nanoseconde. On pourrait parfaitement utiliser des lasers dont la durée d'impulsion est plus courte, dans le domaine de la picoseconde ou même inférieures à, ou de l'ordre, de 100 fs (ultra-court). Ceci permet d'obtenir des densités de puissance comparables ou supérieures (au niveau du volume focal 50) aux lasers dont la durée d'impulsion est dans le domaine de la nanoseconde, avec une énergie par impulsion d'autant plus faible. En particulier, on peut envisager pour un laser 30 à fibre de type « Q-switched » dont la durée d'impulsion est dans le domaine de la picoseconde, une cadence de répétition des impulsions allant jusqu'à 150 MHz, avec une énergie par impulsion inversement proportionnelle. Cependant, ce type de laser est généralement plus complexe à mettre en oeuvre et plus onéreux.

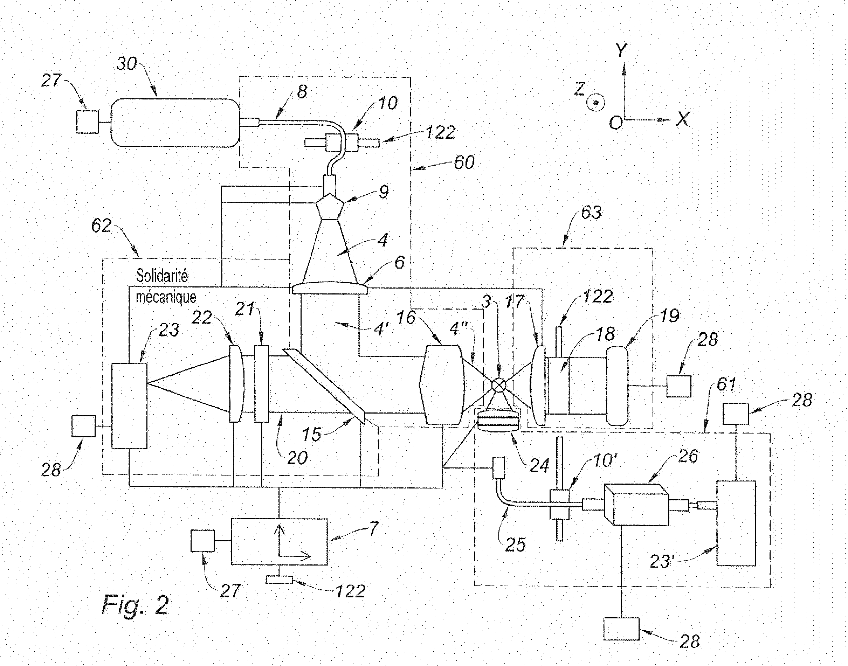

Le dispositif optique 60 (figure 2) participe lui aussi à l'ajustement de la densité de puissance (éclairement) dans le volume focal 50 et au réglage des dimensions de ce volume focal 50, dans lequel on cherche à n'obtenir qu'une seule particule.

Le dispositif optique 60 comprend avantageusement une fibre optique 8 en sortie du laser 30. De préférence, cette fibre optique 8 possède une faible ouverture numérique (ON) de manière à pouvoir focaliser fortement le faisceau laser en sortie de la fibre optique 8, permettant ainsi de conserver une bonne qualité de faisceau laser, évitant ou limitant toute perte préjudiciable pour obtenir la densité de puissance seuil au niveau du volume focal 50 nécessaire à la formation d'un plasma. Cette fibre, ainsi que les connecteurs associés, doivent être conçus pour supporter la transmission de fortes puissances moyennes à la longueur d'onde du laser (de l'ordre de plusieurs dizaines de W) et de fortes puissances crête (de l'ordre de 250 kW crête). On choisira par exemple une fibre optique 8 dont l'ouverture numérique ON vaut 0,05 et dont le diamètre de coeur vaut 105 µm.

Comme on peut le constater sur la figure 1, le laser 30 est situé à l'extérieur de la chambre 120 sous vide, dont la paroi est référencée 122 (le laser 30 est également à l'extérieur de la chambre de détente 112). Quant à elle, la fibre optique 8 est introduite dans la chambre 120 sous vide par l'intermédiaire d'un passage 10 formé dans la paroi 122. Ce passage 10 peut être réalisé par collage concentrique (à l'aide d'une résine polymère époxyde, par exemple) de la fibre nue sur une cavité cylindrique, qui elle-même est solidaire et étanche par rapport à la chambre 120. Avantageusement, une longueur suffisante de fibre optique 8 est laissée libre dans la chambre 120, pour autoriser les déplacements éventuels du dispositif optique 60 par rapport au jet 3 de particules, comme cela sera expliqué par la suite. Le passage 10 peut aussi être réalisé par un passage étanche à simple ou à double joint conique(s) tels que ceux qui sont classiquement utilisés pour les passages de thermocouples ou de câbles électriques.

Au niveau de la sortie de la fibre optique 8, on peut avantageusement prévoir un dispositif de refroidissement 9.

On peut se référer à la figure 4.

Ce dispositif de refroidissement 9 peut se présenter sous la forme d'un échangeur thermique dont le fluide de refroidissement est de l'eau (entrée eau E_{W} et sortie eau S_{W}). Sa présence peut s'avérer nécessaire pour protéger la sortie de fibre optique 8 contre un endommagement d'origine thermique provenant de l'importante densité de puissance moyenne du faisceau laser 4 émis à cet endroit (cela dépend de la puissance du laser 30 et du diamètre de cœur de la fibre optique 8). A cet effet, le dispositif de refroidissement 9 comporte une tuyauterie 90 qui entoure avantageusement l'extrémité 80 de la fibre optique 8 qui est située à l'opposé du laser 30.

Le faisceau laser 4 sortant de la fibre optique 8 est alors collimaté par une lentille optique 6 ou tout moyen équivalent. Par exemple, la lentille optique 6 peut présenter une focale de 100 mm. Le faisceau laser collimaté 4' est alors dirigé par un miroir 15, avantageusement orientable (par exemple selon un angle compris entre 15° et 45° par rapport à la direction de propagation du faisceau laser collimaté 4') vers un objectif de microscope 16. En fonction de la disposition du laser 30, un tel miroir 15 peut être supprimé.

L'objectif de microscope 16 (par exemple d'ouverture numérique ON = 0.25, distance de travail = 15 mm, grandissement = 10) focalise le faisceau laser sur le jet de particules 3 (dont la direction de propagation est perpendiculaire au plan de la figure sur la figure 2). A noter que l'ensemble formé par le moyen de collimation 6, le miroir 15 et le moyen de focalisation 16 sont représentés par le bloc 70 sur la figure 1.

Grâce à cela, le volume focal 50 du faisceau laser 4" (focalisé) est réduit suffisamment pour que, statistiquement, une seule particule NP_{VF} au plus se trouve à l'intérieur du volume focal 50 lors d'une impulsion laser. Il en résulte qu'une particule se situant à l'intérieur du volume focal 50 formera un plasma par interaction avec le laser. Bien entendu, si aucune particule ne se trouve dans ce volume focal 50 lors d'une impulsion laser, aucun plasma n'est formé. En pratique, une fois le type de laser 30 choisi, le volume focal 50 peut être ajusté, par les paramètres du dispositif optique 60, en fonction de la densité supposée de particules dans le jet de particules.

La création d'un plasma local, engendré par l'interaction laser-particules, est d'un grand intérêt. En effet, ce plasma émet les particules suivantes : photons, électrons et ions ; qu'il est possible de détecter. Et cette détection permet finalement d'obtenir des données sur la nature chimique de la particule considérée.

Dans une configuration préférentielle, on détectera la lumière (photons) émise par le plasma dans un domaine de longueurs d'ondes le plus large possible, de manière à maximiser le nombre de photons collectés, donc la sensibilité de la mesure.

C'est ce qui est réalisé par l'intermédiaire des dispositifs de détection 61, 62.

Une première voie envisageable pour collecter l'émission lumineuse du plasma (photons) est d'utiliser un dispositif de détection 61 qui est indépendant du trajet optique utilisé pour le faisceau laser.

Avantageusement, la collection est effectuée par une fibre optique 25 par l'intermédiaire d'un ensemble optique 24 qui permet de collimater, dans l'angle solide défini par la focale de la lentille de collimation, de filtrer (pour éliminer la longueur d'onde du laser) et de focaliser la lumière émise par le plasma dans la fibre optique 25.

L'utilisation d'une fibre optique 25 n'est pas obligatoire mais permet de simplifier la gestion des mouvements de translation du dispositif de détection 61 qui sont préférentiellement liés à ceux du point de focalisation du laser (au centre du volume focal 50), lorsqu'une telle translation est envisagée.

La lumière est transmise via un passage sous vide 10' à un moyen de discrimination en longueur d'onde 26, situé préférentiellement en dehors de la chambre 120 sous vide. Le dispositif de discrimination en longueur d'onde 26 peut être un monochromateur, un ensemble de filtres ou tout autre dispositif permettant de sélectionner et/ou d'analyser la lumière émise par le plasma en fonction de la longueur d'onde. De cette manière, la lumière transmise au détecteur 23', qui est préférentiellement un tube photomultiplicateur, est une partie filtrée en longueur d'onde du spectre total émis par le plasma. Il est ainsi possible de sélectionner l'émission correspondant à un élément chimique donné et d'effectuer une analyse élémentaire de la particule présente dans le volume focal 50. De plus, comme au plus une seule particule NP_{VF} est présente dans le volume focal 50 à chaque tir laser, il est possible de déduire une dispersion en composition chimique des particules, c'est-à-dire de savoir si toute les particules ont la même composition chimique ou s'il y a une certaine disparité. Cet aspect est important car le dispositif peut ainsi être employé pour effectuer une analyse chimique des particules.

Il convient de noter que, dans certains cas, le moyen de discrimination en longueur d'onde 26 doit être placé à l'intérieur de la chambre 120 sous vide. C'est par exemple le cas lorsque des plasmas émettant à des longueurs d'onde situées dans le VUV (« Vaccuum Ultra-Violet » selon la terminologie anglo-saxonne, i.e. à une longueur d'onde < 200 nm) doivent être détectées (la transmission de ces longueurs d'onde dans l'air est mauvaise).

Une deuxième voie envisageable est de collecter la lumière émise par le plasma en utilisant l'objectif de microscope 16 (qui sert aussi à focaliser le laser) pour collimater cette lumière dans l'angle solide correspondant. La lumière ainsi collimatée traverse le miroir 15, qui doit alors être un miroir dichroïque (donc qui laisse passer toutes les longueurs d'ondes sauf celle du laser). On peut utiliser un filtre supplémentaire 21 pour éliminer complètement le résidu de lumière provenant du laser. Ce filtre 21 est par exemple un filtre interférentiel coupe-bande centré sur la longueur d'onde du laser ou un miroir laser multicouches à 0° d'incidence et à la longueur d'onde du laser. La lumière provenant du plasma ainsi filtrée peut alors être focalisée par un moyen complémentaire de focalisation 22 (lentille optique, par exemple ; non obligatoire si l'objectif de microscope seul permet d'adapter correctement le faisceau à la surface du détecteur de photons 23) vers un détecteur de photons 23. Ce détecteur de photons 23 est par exemple un tube photomultiplicateur (par exemple PMT R212, Hamamatsu) sensible dans une gamme de longueur d'onde très large incluant idéalement le proche UV, le visible et le proche IR.

On peut utiliser indifféremment l'une ou l'autre des deux voies présentées ci-dessus pour collecter la lumière émise par le plasma.

On peut aussi utiliser ces deux voies simultanément. Dans ce cas, la lumière collectée par les deux dispositifs de détection 61, 62 étant émise par la même particule, il est possible d'étudier, par un traitement spécifique des données, les phénomènes de coïncidences entre les deux signaux sur un ensemble d'événements, Il est possible, par exemple, de corréler l'amplitude ou la durée de l'émission totale du plasma mesurée par la première voie à l'apparition d'un élément chimique donné mesurée par la deuxième voie. Cette solution est donc avantageuse.

Les expériences conduites par les inventeurs ont montré que l'émission lumineuse du plasma était impulsionnelle, légèrement retardée par rapport à l'impulsion laser, et d'une durée de quelques centaines de nanosecondes. Le système d'acquisition et de traitement des données 28 est donc particulièrement bien adapté à un mode de comptage d'évènements. Par comptage d'événements, on comprend le nombre de fois où une particule a été détectée dans le volume focal 50 pour un nombre donné d'impulsions du laser.

Dans ce mode de fonctionnement, le nombre d'événements comptés est proportionnel à la densité moyenne de particules à la position considérée du faisceau laser. Ceci est lié au fait qu'on a au plus une particule dans le volume focal 50.

Le signal lumineux émis à chaque événement (une particule au plus dans le volume focal 50) est donc avantageusement enregistré en mode comptage d'événements.

Ainsi, seuls les événements dont la réponse dépasse le seuil du niveau de bruit sont comptés pendant le temps d'intégration. Ceci permet de s'affranchir des fluctuations d'intensité du signal lumineux émis par le plasma et, par conséquent (comme précisé précédemment), le nombre d'évènements est directement relié à la densité de particules au sein du faisceau de particules, à la position considérée du faisceau laser.

L'incertitude de mesure est connue et caractérisée par une distribution de Poisson.

Tout ceci concourt à la qualité de la mesure réalisée.

En variante, on pourrait cependant envisager de mesurer l'intensité du signal lumineux reçu au niveau du détecteur 23, par exemple si l'on souhaite déterminer la taille des particules. Avantageusement, le dispositif 100 prévoit un dispositif additionnel 63 pour mesurer la puissance du faisceau laser. Cela peut s'effectuer à l'aide d'un wattmètre 19 placé à l'extérieur de la chambre 120 sous vide, derrière une fenêtre 18 (transparente à la longueur d'onde du laser), après collimation du faisceau par une optique 17 située après le volume focal 50 dans le parcours du faisceau laser.

Le dispositif additionnel 63 permet de mesurer la puissance dans le volume focal 50. En théorie, cette puissance peut être connue par les caractéristiques du laser 30 et des différents composants formant le dispositif optique 60.

Cependant, cette mesure est avantageuse sur le plan pratique car elle permet d'une part, de s'assurer de la puissance effective dans le volume focal 50 et d'autre part, une gestion plus aisée, par l'intermédiaire du moyen d'acquisition et de traitement des données 28 du laser 30 et/ou du dispositif optique 60 afin de modifier le volume focal 50.

Par ailleurs, dans le cas où un moyen de réglage de l'énergie du laser 30 est prévu, par exemple un atténuateur variable, la mesure réalisée par le dispositif additionnel 63 est nécessaire pour ajuster le volume focal 50 dont les caractéristiques évoluent avec le réglage réalisé au niveau du laser 30.

Les différents dispositifs 60, 61, 62 sont avantageusement fixés sur un moyen 7 permettant leur translation selon au moins une direction perpendiculaire à la direction de propagation du jet de particules dans la chambre 120. C'est ce qui est représenté sur la figure 2, par les lignes en gris clair nommées « solidarité mécanique » qui montrent que le moyen de translation 7 imprime un même mouvement de translation à l'ensemble des dispositifs 60, 61, 62 concernés.

Bien entendu, lorsque l'un seulement des deux dispositifs de détection 61, 62, servant à la collection de la lumière émise par le plasma, est envisagé, la translation ne peut s'opérer que sur le dispositif de détection prévu.

Dans tous les cas, le dispositif optique 60 servant à la collimation du faisceau laser 4, 4', 4" jusqu'au volume focal 50 est alors soumis à translation. En effet, l'objectif de ce moyen de translation 7 est de déplacer ensemble les différents dispositifs 60, 61, 62 concernés pour être en mesure de réaliser un profil, en l'occurrence à une dimension (1D) de la répartition en densité des particules dans le jet de particules 3 selon l'axe de translation choisi. A cet effet, ce moyen 7 peut se présenter sous la forme d'une platine de translation motorisée, contrôlée par l'intermédiaire du moyen de commande 27 (servant aussi à la commande du laser 30).

Avantageusement, on ira au-delà de l'obtention d'un profil 1D dans une largeur du jet 3 de particules en proposant un moyen 7 capable de réaliser des mouvements pour analyser l'ensemble d'une section du jet de particules (donc selon une première direction perpendiculaire à la direction de propagation du jet de particules dans la chambre et une deuxième direction à la fois perpendiculaire à la direction de propagation du jet de particules dans la chambre de dépôt et à la première direction). La translation dans l'une et/ou l'autre des deux directions perpendiculaires l'une par rapport à l'autre formant la section analysée est effectuée de façon indépendante.

A cet effet, le moyen 7 peut se présenter sous la forme de deux platines de translation motorisées, toutes deux contrôlées de manière indépendante par le moyen de commande 27.

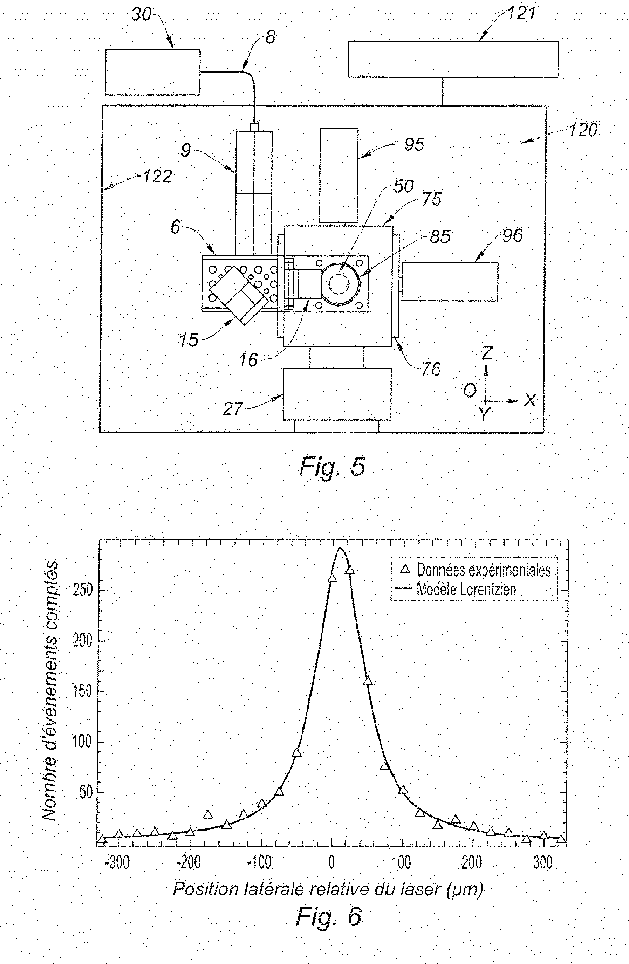

Le moyen 7 comportant ces deux platines 75, 76 est représenté sur la figure 5 dans son environnement.

La première platine 75 autorise un déplacement selon la première direction (OZ) perpendiculaire à l'axe de propagation du jet de particules (OY) et la deuxième platine 76 autorise un déplacement dans la deuxième direction (OX), à la fois perpendiculaire à la première direction (OZ) et à la direction de propagation du jet de particules (OY). Le repère (O ; X, Y, Z) forme un repère orthonormé direct d'origine O.

Comme on peut le constater sur la figure 5, les platines 75, 76 comprennent toutes deux un orifice central 85 pour laisser le passage libre aux particules.

Bien entendu, ces platines permettent un déplacement suffisant en amplitude pour couvrir les dimensions du jet de particules (qui sont au plus de l'ordre de quelques millimètres) ainsi qu'une résolution spatiale adaptée, à savoir de l'ordre de quelques micromètres.

Ceci est géré par le moyen de commande 27, lequel contrôle un premier moteur 95 dont la fonction est d'assurer la translation de la première platine 75 selon l'axe OZ et un deuxième moteur 96 dont la fonction est d'assurer la translation de la deuxième platine 76 selon l'axe OX.

On obtient ainsi une cartographie en deux dimensions (2D) de la densité du jet 3 en particules.

Notons que la densité de particules dans le jet 3 est généralement comprise entre 10⁴ et 10⁶ cm⁻³, et peut être comprise entre 10³ et 10⁷ cm⁻³. La cadence de répétition du laser 30 doit alors être suffisante pour pouvoir réaliser des cartographies en 2D avec une bonne résolution dans un temps raisonnable. Par exemple, une cadence de répétition de 25 kHz permet typiquement une cartographie en 2D avec une résolution de 20 µm dans les 2 axes en moins d'une heure. Un profil 1D est typiquement réalisable en quelques minutes dans ces conditions.

L'analyse de jets avec des densités de particules plus faibles sont envisageables mais impliquent des procédures plus longues pour la caractérisation du jet.

Une extension possible du moyen de translation 7, notamment celui qui est représenté sur la figure 5, consiste à ajouter une platine de translation motorisée dans l'axe de propagation du jet 3 de particules, de manière à pouvoir effectuer des cartographies en 3D de la densité de particules dans le jet (ceci peut s'avérer intéressant dans le cas d'un jet fortement divergent). Sa gestion par le moyen de commande 27 est indépendante de sa gestion des deux autres platines, si bien qu'une totale liberté est obtenue sur le choix du positionnement des différents dispositifs 60, 61, 62 le long de l'axe de propagation du jet 3 de particules. Cette platine supplémentaire peut être montée avec les deux autres platines ou bien, être placée sur la lentille aérodynamique.

Le volume focal 50 peut être ajusté en choisissant les optiques de focalisation du laser (dispositif optique 60) en fonction de la densité supposée en particules dans le jet, des caractéristiques du laser 30 et de la fibre optique 8.

L'important est d'obtenir un volume focal 50 correctement dimensionné de façon à ce qu'une seule particule au plus soit présente à l'intérieur de ce volume focal 50 à chaque tir laser, tout en conservant une résolution spatiale suffisante et un temps de mesure raisonnable. On considère que c'est le cas lorsque le nombre moyen de particules présent à chaque tir laser dans le volume focal 50 est inférieur à 0,1 (autrement dit 10 tirs laser en moyenne pour obtenir une particule dans le volume focal 50 ; on s'assure ainsi d'avoir une probabilité négligeable d'obtenir plus d'une particule dans le volume focal 50). Cette précaution est importante, car elle permet de relier directement un comptage d'événements à une densité locale de particules. Elle permet donc de s'affranchir de la mesure de l'intensité du signal lumineux (photons émis par le plasma) qui peut être entachée de diverses variations incontrôlées, dues par exemple à la localisation de la particule dans le volume focal 50, à la distribution de taille des différentes particules, au bruit de photons et aux instabilités intrinsèques à la dynamique du plasma qui est un phénomène fortement non linéaire,

Le fait de travailler en mode de comptage de particule unique n'est donc pas seulement un atout pour réaliser une analyse chimique des particules, mais est aussi un atout pour déterminer un profil 1D, une carte 2D ou encore 3D de la densité des particules dans le jet 3 (lorsque le moyen 7 adéquat est prévu au sein du dispositif 100).

Comme cela a été précisé précédemment, le plasma produit par l'interaction entre une particule et le laser émet des photons, des électrons et des ions. La description faite en référence aux dispositifs de détection 61, 62 met en oeuvre une détection de photons.

Pour autant, on pourrait prévoir de détecter les électrons ou les ions à la place des photons, ou encore les photons en même temps que les électrons ou les photons en même temps que les ions. De cette manière, il est possible de relier les différentes mesures par coïncidence pour valider la réalité d'un événement unique (détection d'une seule particule dans le volume focal 50). Il est alors possible de réduire le bruit de fond de mesure en discriminant les événements réels de ceux générés aléatoirement par le bruit des détecteurs ou de l'électronique d'acquisition. Cette alternative est plus difficile à mettre en oeuvre et nécessite un dispositif plus sophistiqué pour le traitement des mesures. Il peut cependant s'avérer nécessaire, lorsque le nombre d'événements à compter est faible devant le bruit de fond de mesure (cas des faibles densités en particules dans le jet, par exemple). A cet effet, on peut par exemple envisager de mettre en œuvre le dispositif représenté sur les figures 1, 2, 4 et 5 en remplaçant le dispositif optique 61 par un dispositif dédié à la détection des ions ou des électrons. De manière classique, ce dispositif peut se présenter sous la forme d'un assemblage composé de galettes de micro-canaux (MCP pour « Micro Channel Plates » selon la terminologie anglo-saxonne) permettant de détecter efficacement les particules chargées (ions ou électrons). Le choix de la détection d'ions ou d'électrons peut s'effectuer en appliquant un champ électrostatique à l'aide de grilles métalliques placées entre les galettes de micro-canaux et le plasma. L'orientation de ce champ est choisie en polarisant les grilles métalliques, ce qui permet de déterminer le signe (positif ou négatif) de la charge des particules (ions ou électrons, respectivement) issues du plasma qu'on veut détecter.

La description qui précède s'est axée sur un système de génération d'un jet de particules dans un gaz porteur comportant une lentille aérodynamique 113.

Ce type de lentille 113 produit un jet dont le profil est de type Gaussien ou Lorentzien. Le diamètre du jet (noté D sur la figure 3) est lié à la géométrie de la lentille aérodynamique, à la nature du gaz porteur et aux propriétés des particules (diamètre aérodynamique, masse, densité et forme).

La forme exacte du profil n'est donc a priori pas connue dans le cas général, d'où l'intérêt d'effectuer une carte 2D par exemple de ce profil.

Plus encore, pour des particules complexes comme des agglomérats de particules primaires, l'homme du métier est aujourd'hui incapable de déterminer (par simulation numérique ou par un dispositif expérimental) le profil spatial en densité de particules dans le jet. C'est également le cas pour toutes les particules non sphériques (étoiles, bâtonnets, nanotubes, cubes) ou possédant une répartition en masse non uniforme (par exemple, les particules de type coeur-coquille).

Dans tous ces cas, le dispositif 100 proposé dans le cadre de l'invention permet donc de déterminer la forme exacte du profil en densité de particules.

En pratique, ceci s'effectue simplement de la façon suivante. On place le laser dans une position donnée et on effectue la mesure locale de densité de particules. Puis, on déplace le laser dans une position voisine et on effectue une autre mesure et ainsi de suite jusqu'à couvrir complètement les dimensions du jet.

La lentille aérodynamique 113 peut être remplacée par une tuyère, en particulier aux fins de générer un jet supersonique de gaz porteur entraînant les particules,

Cela ne change rien, dans le cadre de la caractérisation des particules, pour l'analyse chimique des particules, ni par ailleurs le cas échéant pour la détermination de leur taille.

En ce qui concerne le profil en densité des particules, le dispositif 100 présente cependant moins d'intérêt qu'avec une lentille aérodynamique.

En effet, les dimensions du jet supersonique sont déterminées par l'angle solide formé par la tuyère et le diamètre de l'écorceur 40. Cet angle solide est toujours très inférieur à l'angle solide de détente du jet supersonique lui-même incluant les particules. On observe généralement un profil rectangulaire dont les dimensions sont donc connues. Le dispositif 100 selon l'invention permet néanmoins de déterminer si la partie « plate » du profil est réellement plate, ou si un profil de densité plus complexe est à prendre en compte de manière à prédire correctement ce profil et par suite, l'homogénéité d'un dépôt de particules sur un substrat le cas échéant.

Un inconvénient du jet supersonique reste toutefois lié au fait que la densité de particules dans le gaz porteur est de l'ordre de 100 fois plus faible qu'avec une lentille aérodynamique. Ainsi, pour obtenir un plasma au niveau du volume focal 50, il convient de modifier le réglage des différents moyens du dispositif optique 60 pour la focalisation du faisceau laser ou augmenter l'énergie par impulsion du laser. Le prix à payer est un temps d'analyse plus long pour mesurer le profil en densité des particules.

Par ailleurs, il convient de noter que la détection réalisée dans le cadre de l'invention est utilisable pour toute nature chimique de particule, pour toute forme et toute taille de particules. Ceci est lié à la nature de l'interaction laser-particule. L'interaction laser-particule est forte et conduit immanquablement à la formation d'un plasma dont l'émission de photons, électrons ou ions est détectable dès lors que le seuil de formation de ce plasma est dépassé.

En particulier, une faible taille des particules n'est pas un facteur limitant dans la mesure où les moyens de détection (dispositifs de détection 61, 62), qui seront décrits ci-après peuvent être adaptés, par exemple par l'emploi d'un photomultiplicateur, à la détection rapide d'une très faible intensité lumineuse dans le cas où l'on détecte des photons (jusqu'au photon unique). Les expériences conduites par les inventeurs ont en effet montré que le procédé est utilisable avec des particules agglomérées dont les dimensions sont aussi faibles que 5 nm (nanoparticule).

En particulier également, l'invention n'est pas limitée à des nanoparticules, mais peut s'étendre à des particules bien plus grosses. C'est pourquoi, dans le cadre de l'invention, on parle plus généralement de particules.

En effet, il n'y a, sur le plan théorique, pas de limite supérieure de taille pour la détection de la particule. On peut donc avoir accès au profil de répartition en densité des particules dans le jet, indépendamment de la taille de ces particules, Par ailleurs, quand on cherche à connaître la composition chimique de la particule, la contrainte est de s'assurer que l'interaction laser-particule produit un plasma, ce qui revient à adapter la densité de puissance dans le volume focal 50.

Compte tenu des dimensions des particules dans un jet qui peuvent être rencontrées sur le plan pratique, on peut donc envisager dans le cadre de l'invention de déterminer la composition chimique et/ou le profil des particules dans le jet pour des particules atteignant quelques centaines de microns, par exemple mais non limitativement jusqu'à 500 microns.

Le dispositif 100 selon l'invention n'est pas limité à un dispositif visant simplement à l'analyse chimique de particules et/ou à la détermination d'un profil en densité des particules au sein du jet.

Une application intéressante concerne le dépôt de particules, en particulier des nanoparticules, sur un substrat. En effet, la connaissance exacte de ce profil permet de mieux prédire la répartition du dépôt sur le substrat et in fine, un meilleur contrôle des propriétés de la pièce ainsi fabriquée.

Les différents dispositifs 60, 61, 62, 63 peuvent s'insérer facilement entre la sortie de la lentille aérodynamique 113 (ou de la tuyère dans le cas d'un jet supersonique) ou la sortie de l'écorceur 40 et un substrat logé dans la chambre 120, substrat sur lequel on cherche à réaliser un dépôt. L'emploi d'un laser impulsionnel 30 avec des durées d'impulsion de l'ordre de quelques nanosecondes et d'un volume focal 50 extrêmement réduit permettent une analyse pratiquement non destructive (ordre de grandeur : 1 particule sur 100000 est vaporisée par le laser, dans le cas d'une nanoparticule. Ce chiffre est ajustable en jouant sur le volume focal et la cadence du laser). Le dispositif 100 peut donc être modifié pour autoriser, successivement ou simultanément la collection de données sur les particules, et le dépôt sous vide d'un matériau structuré, en particulier nanostructuré. A cet effet, il convient évidemment de prévoir un substrat 13 sur l'axe de propagation du jet de particules, après le volume focal 50 en référence au sens de propagation de ce jet (ce sens de propagation est noté S_{P} sur la figure 3).

Ainsi, on peut prévoir un premier obturateur amovible 11, situé entre la sortie de la lentille aérodynamique 113 (ou la tuyère, selon le cas) ou l'écorceur 40 d'une part et, le volume focal 50. Cet obturateur 11 permet d'effectuer une mesure du bruit de fond pour vérifier qu'aucun signal n'est mesuré en l'absence de particules dans le jet. Cela permet d'évaluer le rapport signal sur bruit et de repérer, le cas échéant, l'origine de bruits gênants pour les mesures. On peut également prévoir un deuxième obturateur 12, en présence du premier obturateur 11 ou non, lorsque l'on cherche uniquement à caractériser les particules (nature chimique et/ou profil en densité), sans réaliser de dépôt sur le substrat 13. Le deuxième obturateur 12 est alors situé entre le volume focal 50 et le substrat, en référence à la direction de propagation du jet 3 de particules.

Le dispositif 100 peut aussi être utilisé en temps réel, par exemple à position fixe des dispositifs 60, 61, 62 (platines de translation fixes), dans le but d'un contrôle en ligne d'un procédé de dépôt d'un matériau structuré, par exemple nanostructuré, sur un substrat 13. Dans ce cas, les obturateurs 11, 12 ne sont pas en position d'obturation.

Les particules, en particulier les nanoparticules, déposées sur le substrat 13 peuvent être déposées seules. Il est bien entendu possible de modifier le dispositif 100, en ajoutant un dispositif additionnel dans la chambre 120, permettant par exemple le dépôt d'une matrice d'enrobage pour les particules, comme cela est par exemple proposé dans FR 2971518, en particulier avec une lentille aérodynamique.

### Exemple d'application:

Avec le dispositif représenté sur les figures 1, 2, 4 et 5, les inventeurs ont cherché à déterminer le profil 1D de densité de nanoparticules dans le jet (largeur du jet dont la largeur à mi-hauteur, etc...). Le laser 30 utilisé est de type Q-switched à fibre dont le milieu actif est une fibre à cristal photonique dopée à l'ytterbium (Boreas, Eolite, France). Le laser 30 émet dans l'infrarouge (λ = 1030 nm) avec une largeur d'impulsion nominale variant de 9 à 20 ns pour des cadences de répétition comprises entre 1 et 25 kHz, respectivement. A la sortie du laser 30, l'énergie d'impulsion maximale est de 2 mJ et la puissance moyenne maximale est de 25 W avec un excellent profil de faisceau (facteur de qualité de faisceau M² proche de 1).

Pour le test considéré ici, ce laser 30 fonctionnait à une cadence de répétition de 20 kHz et fournissant une puissance moyenne de 10,7 W.

Le faisceau laser est guidé et introduit à l'intérieur de la chambre sous vide 120 à l'aide d'une fibre optique 8 (ouverture numérique O.N. = 0,05, diamètre du cœur = 105 µm, longueur > 6 m), dont les caractéristiques assurent assure un faisceau de bonne qualité permettant un éclairement approprié pour la formation du plasma.

Un dispositif de refroidissement 9 est prévu.

Le faisceau laser 4 est collimaté avec une lentille 6, de focale 100 mm.

En sortie de la lentille 6, un miroir dichroïque 15, disposé à 45°, réfléchit le faisceau laser 4' vers un objectif 16 de microscope (O.N. = 0,25, la distance de travail, WD = 15 mm, grossissement = 10) qui focalise le faisceau laser 4" pour former le volume focal 50.

L'ensemble du montage optique est monté sur deux platines 7 de translation motorisées commandées par le moyen 28, placées perpendiculairement entre elles de sorte à être capable de réaliser un profil 2D du faisceau de particules.

La lumière émise par le plasma est détectée par un tube photomultiplicateur 23' (PMT R212, Hamamatsu, Japon) équipé, en amont, d'un miroir de cavité laser (il s'agit du composant pris en sandwich entre deux lentilles, lesquels forment ensemble la référence 24 ; figure 2 par exemple) pour filtrer la lumière venant directement du laser et est situé perpendiculairement à l'axe du laser.

Le signal d'émission optique est acquis en mode dit de « comptage d'événements », comme expliqué précédemment.

La source de nanoparticules est une suspension de nanoparticules de silicium d'une concentration de 1g/l. La suspension est atomisée à l'aide d'un dispositif commercial de type 3076 de marque TSI, USA (l'ensemble formé par cette source et le dispositif d'atomisation correspond au générateur 111 ; figure 1). Les nano-aérosols ainsi formés sont guidés par un flux de gaz porteur (air en l'occurrence), jusqu'à l'entrée de la lentille aérodynamique 113.

La lentille aérodynamique est celle qui est proposée par X.F. Zhang & al. (D1). Elle est donc composée de cinq orifices minces séparés par des chambres et terminée par une buse 1, en l'occurrence de 3 mm de diamètre.

Avec le générateur 111 précité, les nanoparticules de silicium présentent un diamètre moyen d = 14nm (connu de l'expérimentateur). Elles sont par ailleurs agglomérées (taille moyenne d'un agglomérat T_{A} = 150nm ; donnée connue de l'expérimentateur).

La figure 6 fournit les résultats expérimentaux obtenus avec le dispositif décrit. En abscisses, on a représenté la position relative du plan focal du laser 30 en microns par rapport au centre du jet de nanoparticules (cela correspond à la position du volume focal 50). Les valeurs non nulles représentent un décalage selon l'axe (O ; Y) du laser 30 et donc du volume focal 50. En ordonnées, on a représenté le nombre d'événements comptés. Les données expérimentales représentées sont donc des données 1D, bien que le dispositif employé permette de réaliser des profils 2D. La forme générale de la courbe expérimentale permet de bien vérifier que le profil 1D est Lorentzien.

Par ailleurs, elle permet d'avoir accès à la largeur du jet à mi-hauteur (donnée inconnue de l'expérimentateur avant la mise en oeuvre du test), qui est en l'occurrence de 82 µm.

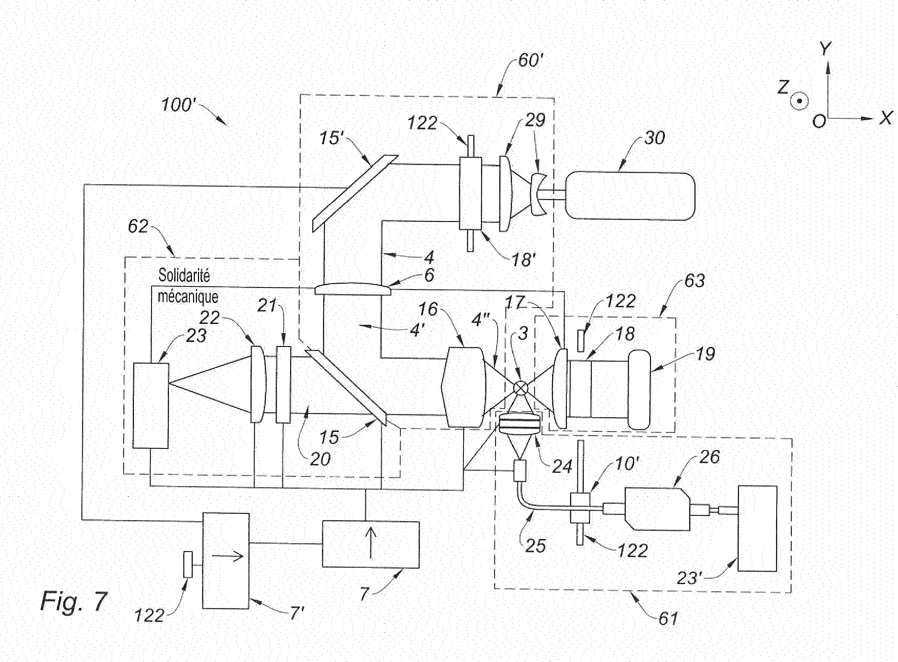

La figure 7 propose un dispositif alternatif 100', dans lequel le dispositif optique pour la focalisation du faisceau laser est modifié. Ce dispositif optique 60' ne met pas en oeuvre de fibre otique (à noter que les moyens 27, 28 ne sont pas représentés sur cette figure 7, mais bien présents en réalité).

Cette alternative conduit à utiliser un miroir de renvoi supplémentaire 15' en direction de la chambre 120 pour l'acheminement du faisceau laser ainsi qu'à modifier les liens de solidarité mécanique entre tous les éléments du montage et la ou les platine(s) de translation.

Par exemple, si le faisceau laser est introduit horizontalement (axe X), comme dans la figure 7, l'ensemble des éléments optiques à l'exception du premier miroir de renvoi 15' sera relié à la platine de translation dans l'axe vertical Y. Cette platine 7 sera reliée mécaniquement à la platine 7' de translation dans l'axe horizontal X, qui sera également solidaire du premier miroir de renvoi 15'. La platine de translation 7' se déplacera par rapport à la chambre 120 sous vide. Cette précaution permet de garantir le centrage du faisceau laser sur les différentes optiques et ainsi maîtriser la position réelle du point de focalisation du laser (centre du volume focal 50). Cette alternative sans fibre optique à la sortie du laser 30 peut conduire à l'emploi d'un système optique 29 destiné à élargir le diamètre du faisceau laser avant son introduction à l'intérieur de la chambre 120 par l'intermédiaire de la fenêtre optique 18'. Cette précaution permet de protéger les optiques traversées par le faisceau laser contre des intensités crêtes trop élevées et permet d'optimiser le volume focal 50.

## Revendications

1. Dispositif (100) de caractérisation de particules évoluant sous vide dans un jet de particules, comprenant :
- une chambre (120) ainsi qu'un moyen de pompage (121) du fluide présent dans la chambre afin de faire régner le vide dans cette chambre ;
- un système (110) agencé pour générer dans la chambre (120) un jet de particules sous vide dans lequel les particules sont focalisées, ou fortement collimatées au sein d'un gaz porteur ou agencé pour générer un jet supersonique d'un gaz porteur entraînant les particules;
- un laser (30) agencé pour émettre un faisceau laser sous la forme d'impulsions, un moyen de commande (27) pour contrôler les caractéristiques du laser, un dispositif optique (60) pour focaliser ledit faisceau dans la chambre (120), perpendiculairement à la direction de propagation du jet de particules, au moins un dispositif de détection (61, 62) agencé pour détecter les particules émises par le plasma et auquel est associé un moyen d'acquisition et de traitement des données (28) issues de la détection desdites particules émises par le plasma, **caractérisé en ce que**
le dispositif optique (60) est agencé pour focaliser ledit faisceau laser sur le jet de particules pour former un volume focal (50) réduit suffisamment pour que, statistiquement, une seule particule au plus se trouve à l'intérieur du volume focal (50) lors d'une impulsion laser, afin qu'une particule se situant à l'intérieur du volume focal (50) forme un plasma par interaction avec le faisceau laser, ledit plasma émettant d'autres particules, caractéristiques de l'interaction entre le laser et cette particule du jet.

2. Dispositif selon la revendication 1, dans lequel le dispositif optique (60) comprend au moins une fibre optique (8), un moyen de collimation (6) et un moyen de focalisation (16) du faisceau laser et éventuellement un miroir de renvoi (15) du faisceau laser situé entre le moyen de collimation (6) et le moyen de focalisation (16).

3. Dispositif selon la revendication précédente, dans lequel le dispositif optique (60) comprend également un moyen de refroidissement (9) de la au moins une fibre optique (8), disposé à la sortie de ladite au moins une fibre optique (8).

4. Dispositif selon l'une des revendications précédentes, comprenant un moyen (7) pour translater le dispositif optique (60) avec le au moins un dispositif de détection (61, 62), selon au moins une direction (Y, Z) perpendiculaire à la direction (X) de propagation du jet de particules dans la chambre (120).

5. Dispositif selon la revendication précédente, dans lequel le moyen (7) pour translater le dispositif optique (60) avec le au moins un dispositif de détection (61, 62) est conformé pour translater lesdits dispositifs (60, 61, 62) selon au moins une première direction (Y) perpendiculaire à la direction (X) de propagation du jet de particules dans la chambre (120) et une deuxième direction (Z) à la fois perpendiculaire à la direction (X) de propagation du jet de particules dans la chambre (120) et à la première direction (Y), et pour réaliser la translation dans l'une et/ou l'autre des deux directions (Y, Z) de façon indépendante.

6. Dispositif selon l'une des revendications 4 ou 5, dans lequel le moyen (7) pour translater le premier dispositif optique (60) avec le au moins un dispositif de détection (61, 62) est également conformé pour translater ceux-ci selon la direction (X) de propagation du jet de particules dans la chambre (120).

7. Dispositif selon l'une des revendications précédentes, dans lequel le dispositif de détection (61, 62) ou, selon le cas, l'un au moins des dispositifs (61, 62) de détection des particules émises par le plasma généré par l'interaction entre le faisceau laser et une particule du jet de particules comprend un détecteur de photons ou un détecteur d'ions ou un détecteur d'électrons.

8. Dispositif selon l'une des revendications précédentes, dans lequel le dispositif de détection (61) ou l'un au moins des dispositifs de détection (61, 62) comprend :
- une fibre optique (25) ;
- un ensemble optique (24) pour collimater la lumière émise par le plasma, filtrer la longueur d'onde du laser et focaliser cette lumière dans la fibre optique (25) ;
- un détecteur de photons (23') ; et
- un moyen (26) de discrimination en longueur d'onde, relié d'une part à la fibre optique (25) et d'autre part au détecteur de photons (23').

9. Dispositif selon l'une des revendications précédentes, dans lequel le dispositif de détection (62) ou l'un au moins des dispositifs de détection (61, 62) comprend :
- un miroir dichroïque (15) bloquant la longueur d'onde du laser ;
- un détecteur de photons (23) ; et
- un moyen de focalisation (22) de la lumière situé entre le miroir (15) et le détecteur de photons (23).

10. Dispositif selon l'une des revendications 1 à 7, comprenant au moins deux dispositifs de détection (61, 62) dont l'un comprend un détecteur de photons (23, 23') et dont l'autre comprend un détecteur d'ions ou d'électrons.

11. Dispositif selon l'une des revendications précédentes, dans lequel le moyen d'acquisition et de traitement des données (28) est adapté pour fonctionner selon un mode de comptage d'événements, à savoir le nombre de fois où une particule a été détectée dans le volume focal (50) pour un nombre donné d'impulsions du laser (30).

12. Dispositif selon l'une des revendications précédentes, dans lequel le système (110) pour générer le jet de particules focalisées ou fortement collimatées comprend une lentille aérodynamique (113) ou une tuyère.

13. Dispositif selon la revendication précédente, comprenant en outre :
- un générateur de particules (111) dans un gaz porteur ;
- une chambre de détente (112) à laquelle est associée un moyen (114) de pompage ; et
- un écorceur reliant la chambre de détente (112) à la chambre (120),
la lentille aérodynamique (113) ou la tuyère étant située entre la chambre de détente (112) et la chambre (120).

14. Dispositif selon la revendication 12, comprenant en outre un générateur de particules (111) dans un gaz porteur, la lentille aérodynamique (113) ou la tuyère étant située entre le générateur (111) et la chambre (120), et débouchant directement dans la chambre (120).

15. Utilisation d'un dispositif selon l'une des revendications précédentes, pour caractériser des particules évoluant sous vide dans un jet de particules, dans laquelle après avoir choisi le type de laser (30), on ajuste le volume focal (50) par les paramètres du dispositif optique (60) en fonction de la densité supposée de particules dans le jet de particules.

16. Utilisation selon la revendication précédente, dans laquelle les particules sont des nanoparticules présentant une dimension d'au moins 5 nm.

## Patentansprüche

1. Vorrichtung (100) zur Charakterisierung von Teilchen, die sich unter Vakuum in einem Teilchenstrahl fortbewegen, umfassend:
- eine Kammer (120) sowie ein Mittel zum Pumpen (121) des in der Kammer vorhandenen Fluids, um in dieser Kammer ein Vakuum herrschen zu lassen;
- ein System (110), das dafür eingerichtet ist, in der Kammer (120) einen Teilchenstrahl unter Vakuum, in dem die Teilchen fokussiert oder stark kollimiert sind, innerhalb eines Trägergases zu erzeugen, oder das dafür eingerichtet ist, einen Überschallstrahl eines Trägergases zu erzeugen, der die Teilchen mitreißt;
- einen Laser (30), der dafür eingerichtet ist, einen Laserstrahl in Form von Impulsen zu emittieren, ein Steuermittel (27), um die Eigenschaften des Lasers zu steuern, eine optische Vorrichtung (60), um den Strahl in der Kammer (120) zu fokussieren, senkrecht zur Ausbreitungsrichtung des Teilchenstrahls, mindestens eine Detektionsvorrichtung (61, 62), die dafür eingerichtet ist, die von dem Plasma emittierten Teilchen zu detektieren, und mit der ein Mittel zum Erfassen und zum Verarbeiten der Daten (28), die aus der Detektion der von dem Plasma emittierten Teilchen hervorgehen, verknüpft ist, **dadurch gekennzeichnet,**
**dass** die optische Vorrichtung (60) dafür eingerichtet ist, den Laserstrahl auf den Teilchenstrahl zu fokussieren, um ein Fokusvolumen (50) zu bilden, das ausreichend reduziert ist, damit sich, statistisch, während eines Laserimpulses höchstens ein einziges Teilchen im Inneren des Fokusvolumens (50) befindet, sodass ein Teilchen, das sich im Inneren des Fokusvolumens (50) befindet, durch Wechselwirkung mit dem Laserstrahl ein Plasma bildet, wobei das Plasma weitere Teilchen emittiert, die für die Wechselwirkung zwischen dem Laser und diesem Teilchen des Strahls charakteristisch sind.

2. Vorrichtung nach Anspruch 1, wobei die optische Vorrichtung (60) mindestens eine optische Faser (8), ein Mittel zum Kollimieren (6) und ein Mittel zum Fokussieren (16) des Laserstrahls, und gegebenenfalls einen Spiegel zum Umlenken (15) des Laserstrahls, der sich zwischen dem Kollimationsmittel (6) und dem Fokussiermittel (16) befindet, umfasst.

3. Vorrichtung nach dem vorstehenden Anspruch, wobei die optische Vorrichtung (60) ebenfalls ein Mittel zum Kühlen (9) der mindestens einen optischen Faser (8) umfasst, das am Ausgang der mindestens einen optischen Faser (8) angeordnet ist.

4. Vorrichtung nach einem der vorstehenden Ansprüche, das ein Mittel (7) umfasst, um die optische Vorrichtung (60) zusammen mit der mindestens einen Detektionsvorrichtung (61, 62) in mindestens einer Richtung (Y, Z), die zur Ausbreitungsrichtung (X) des Teilchenstrahls in der Kammer (120) senkrecht verläuft, zu verschieben.

5. Vorrichtung nach dem vorstehenden Anspruch, wobei das Mittel (7), um die optische Vorrichtung (60) zusammen mit der mindestens einen Detektionsvorrichtung (61, 62) zu verschieben, dafür ausgestaltet ist, die Vorrichtungen (60, 61, 62) in mindestens einer ersten Richtung (Y), die zur Ausbreitungsrichtung (X) des Teilchenstrahls in der Kammer (120) senkrecht verläuft, und einer zweiten Richtung (Z), die zugleich zur Ausbreitungsrichtung (X) des Teilchenstrahls in der Kammer (120) und zur ersten Richtung (Y) senkrecht verläuft, zu verschieben und dafür, die Verschiebung in der einen und/oder der anderen der zwei Richtungen (Y, Z) unabhängig auszuführen.

6. Vorrichtung nach einem der Ansprüche 4 oder 5, wobei das Mittel (7), um die erste optische Vorrichtung (60) zusammen mit der mindestens einen Detektionsvorrichtung (61, 62) zu verschieben, ebenfalls dafür ausgestaltet ist, diese in der Ausbreitungsrichtung (X) des Teilchenstrahls in der Kammer (120) zu verschieben.

7. Vorrichtung nach einem der vorstehenden Ansprüche, wobei die Detektionsvorrichtung (61, 62) oder, je nach Fall, mindestens eine der Vorrichtungen (61, 62) zum Detektieren der von dem durch die Wechselwirkung zwischen dem Laserstrahl und einem Teilchen des Teilchenstrahls erzeugten Plasma emittierten Teilchen einen Photonendetektor oder einen lonendetektor oder einen Elektronendetektor umfasst.

8. Vorrichtung nach einem der vorstehenden Ansprüche, wobei die Detektionsvorrichtung (61) oder mindestens eine der Detektionsvorrichtungen (61, 62) umfasst:
- eine optische Faser (25);
- eine optische Baugruppe (24), um das von dem Plasma emittierte Licht zu kollimieren, die Wellenlänge des Lasers auszufiltern und dieses Licht in der optischen Faser (25) zu fokussieren;
- einen Photonendetektor (23'); und
- ein Mittel (26) zur Wellenlängendiskriminierung, das einerseits mit der optischen Faser (25) und andererseits mit dem Photonendetektor (23') verbunden ist.

9. Vorrichtung nach einem der vorstehenden Ansprüche, wobei die Detektionsvorrichtung (62) oder mindestens eine der Detektionsvorrichtungen (61, 62) umfasst:
- einen dichroitischen Spiegel (15), der die Wellenlänge des Lasers sperrt;
- einen Photonendetektor (23); und
- ein Mittel zum Fokussieren (22) des Lichts, das sich zwischen dem Spiegel (15) und dem Photonendetektor (23) befindet.

10. Vorrichtung nach einem der Ansprüche 1 bis 7, die mindestens zwei Detektionsvorrichtungen (61, 62) umfasst, von denen eine einen Photonendetektor (23, 23') umfasst, und von denen die andere einen lonen- oder Elektronendetektor umfasst.

11. Vorrichtung nach einem der vorstehenden Ansprüche, wobei das Mittel zum Erfassen und zum Verarbeiten der Daten (28) geeignet ist, in einem Modus zum Zählen von Ereignissen, nämlich der Anzahl von Malen, bei denen, auf eine gegebene Anzahl von Impulsen des Lasers (30), ein Teilchen im Fokusvolumen (50) detektiert wurde, zu arbeiten.

12. Vorrichtung nach einem der vorstehenden Ansprüche, wobei das System (110), um den fokussierten oder stark kollimierten Teilchenstrahl zu erzeugen, eine aerodynamische Linse (113) oder eine Düse umfasst.

13. Vorrichtung nach dem vorstehenden Anspruch, die weiter umfasst:
- einen Generator von Teilchen (111) in einem Trägergas;
- eine Expansionskammer (112), mit der ein Mittel (114) zum Pumpen verknüpft ist; und
- ein Trennblech, das die Expansionskammer (112) mit der Kammer (120) verbindet,
wobei sich die aerodynamische Linse (113) oder die Düse zwischen der Expansionskammer (112) und der Kammer (120) befindet.

14. Vorrichtung nach Anspruch 12, die weiter einen Generator von Teilchen (111) in einem Trägergas umfasst, wobei sich die aerodynamische Linse (113) oder die Düse zwischen dem Generator (111) und der Kammer (120) befindet und direkt in die Kammer (120) mündet.

15. Verwendung einer Vorrichtung nach einem der vorstehenden Ansprüche, um Teilchen, die sich unter Vakuum in einem Teilchenstrahl fortbewegen, zu charakterisieren, wobei, nachdem der Lasertyp (30) gewählt wurde, das Fokusvolumen (50) über die Parameter der optischen Vorrichtung (60) in Abhängigkeit von der vermuteten Teilchendichte im Teilchenstrahl eingestellt wird.

16. Verwendung nach dem vorstehenden Anspruch, wobei es sich bei den Teilchen um Nanoteilchen handelt, die eine Abmessung von mindestens 5 nm aufweisen.

## Claims

1. A device (100) for characterising particles moving in a vacuum in a particle jet, comprising:
- a chamber (120) and means (121) for pumping the fluid present into the chamber to create a vacuum in the chamber;
- a system (110) arranged to generate in the chamber (120) a particle jet under vacuum wherein the particles are focused, or highly collimated within a carrier gas or arranged to generate a supersonic jet of a carrier gas entraining the particles;
- a laser (30) arranged to emit a laser beam in the form of pulses, a control means (27) for controlling the characteristics of the laser, an optical device (60) for focusing said beam in the chamber (120), perpendicularly to the direction of propagation of the particle jet, at least one detection device (61, 62) arranged to detect the particles emitted by the plasma and with which is associated a means of acquiring and processing the data (28) resulting from the detection of said particles emitted by the plasma, **characterised in that**
the optical device (60) is arranged to focus said laser beam on the particle jet to form a focal volume (50) reduced sufficiently so that, statistically, no more than one particle is inside the focal volume (50) during a laser pulse, so that a particle inside the focal volume (50) forms a plasma by interaction with the laser beam, said plasma emitting other particles, characteristics of the interaction between the laser and this particle of the jet.

2. The device according to claim 1, wherein the optical device (60) comprises at least one optical fibre (8), a collimating means (6) and a focusing means (16) for the laser beam and optionally a deflection mirror (15) for the laser beam located between the collimating means (6) and the focusing means (16).

3. The device according to the preceding claim, wherein the optical device (60) also comprises a means (9) for cooling said at least one optical fibre (8), arranged at the output of said at least one optical fibre (8).

4. The device according to one of the preceding claims, comprising means (7) for translating the optical device (60) with said at least one detection device (61, 62), according to at least one direction (Y, Z) perpendicular to the direction (X) of propagation of the particle jet in the chamber (120).

5. The device according to the preceding claim, wherein the means (7) for translating the optical device (60) with said at least one detection device (61, 62) is shaped to translate said devices (60, 61, 62) along at least a first direction (Y) perpendicular to the direction (X) of propagation of the particle jet in the chamber (120) and a second direction (Z) both perpendicular to the direction (X) of propagation of the particle jet in the chamber (120) and to the first direction (Y), and to carry out the translation in one and/or the other of the two directions (Y, Z) independently.

6. The device according to one of claims 4 or 5, wherein the means (7) for translating the first optical device (60) with said at least one detection device (61, 62) is also shaped to translate these along the direction (X) of propagation of the particle jet in the chamber (120).

7. The device according to one of the preceding claims, wherein the detection device (61, 62) or, as the case may be, at least one of the devices (61, 62) for detecting the particles emitted by the plasma generated by the interaction between the laser beam and a particle of the particle jet comprises a photon detector or an ion detector or an electron detector.

8. The device according to one of the preceding claims, wherein the detection device (61) or at least one of the detection devices (61, 62) comprises:
- an optical fibre (25);
- an optical assembly (24) for collimating the light emitted by the plasma, filtering the wavelength of the laser and focusing this light in the optical fibre (25);
- a photon detector (23'); and
- a wavelength discrimination means (26) connected on one hand to the optical fibre (25) and on the other hand to the photon detector (23').

9. The device according to one of the preceding claims, wherein the detection device (62) or at least one of the detection devices (61, 62) comprises:
- a dichroic mirror (15) blocking the wavelength of the laser;
- a photon detector (23); and
- a focusing means (22) of the light located between the mirror (15) and the photon detector (23).

10. The device according to one of claims 1 to 7, comprising at least two detection devices (61, 62), one of which comprises a photon detector (23, 23') and the other of which comprises an ion or electron detector.

11. The device according to one of the preceding claims, wherein the data acquisition and processing means (28) is adapted to operate in an event counting mode, namely the number of times a particle has been detected in the focal volume (50) for a given number of laser pulses (30).

12. The device according to one of the preceding claims, wherein the system (110) for generating the focused or highly collimated particle jet comprises an aerodynamic lens (113) or nozzle.

13. The device according to the preceding claim, further comprising:
- a particle generator (111) in a carrier gas;
- an expansion chamber (112) with which is associated a pumping means (114); and
- a divertor connecting the expansion chamber (112) to the chamber (120),
the aerodynamic lens (113) or nozzle being located between the expansion chamber (112) and the chamber (120).

14. The device according to claim 12, further comprising a particle generator (111) in a carrier gas, the aerodynamic lens (113) or nozzle being located between the generator (111) and the chamber (120), and leading directly into the chamber (120).

15. A use of a device according to one of the preceding claims, for characterising particles moving in a vacuum in a particle jet, wherein after having chosen the type of laser (30), the focal volume (50) is adjusted by the parameters of the optical device (60) as a function of the assumed density of particles in the particle jet.

16. Use according to the preceding claim, wherein the particles are nanoparticles with a size of at least 5 nm.
